**Europäisches Patentamt**

**European Patent Office**

**Office européen des brevets**

(11) Veröffentlichungsnummer: **0 424 844 A2**

# (12) EUROPÄISCHE PATENTANMELDUNG

(21) Anmeldenummer: **90120215.0**

(22) Anmeldetag: **22.10.90**

(51) Int. Cl.5: **B23B 29/32**, B23Q 39/02

(30) Priorität: **24.10.89 DE 3935399**

(43) Veröffentlichungstag der Anmeldung:
**02.05.91 Patentblatt 91/18**

(84) Benannte Vertragsstaaten:
**ES FR IT**

(71) Anmelder: **EMAG MASCHINENFABRIK GMBH
Austrasse 24**

**W-7335 Salach/Württemberg(DE)**

(72) Erfinder: **Steinbach, Heinz
Schlatweg 16
W-7900 Ulm(DE)**

(74) Vertreter: **Zmyj, Erwin, Dipl.-Ing.
Rosenheimer Strasse 52
W-8000 München 80(DE)**

(54) **Werkzeugrevolver für Werkzeugmaschinen.**

(57) Der Revolver für Werkzeugmaschinen weist eine über ein Getriebe (8) drehbare und in bestimmten Drehwinkellagen positionierbare Revolverscheibe (1) auf, wobei das Getriebe auch zum Antrieb einer Werkzeugantriebswelle (19) dient. Auf der Revolverscheibe (1) sind mehrer auf den Umfang verteilte Werkzeughaltevorrichtungen (2) vorgesehen, die ein Basisteil (23) und einen gegenüber dem Basisteil senkrecht zur Revolverachse verschiebbaren und einstellbaren Werkzeughalter (24) aufweist. Im Basisteil (23) ist ein Zustellgetriebe (22) für den Werkzeughalter (24) vorgesehen, wobei das Zustellgetriebe mit der Werkzeugantriebswelle (19) kuppelbar ist.

Hierdurch kann der Werkzeughalter (24) und damit das von ihm getragene Werkzeug (25) in radialer Richtung eingestellt werden. An der Revolverscheibe ist ein fest angeordneter Werkzeughalter (32) mit einem weiteren Werkzeug (33) vorgesehen, wodurch mittels der beiden Werkzeuge (25, 33) zwei parallele Flächen (31, 34) gleichzeitig bearbeitet werden können, wobei die gegenläufigen Zustellbewegungen einerseits durch den den Revolver tragenden Schlitten und andererseites durch die Werkzeughaltevorrichtung (2) bewerkstelligt werden.

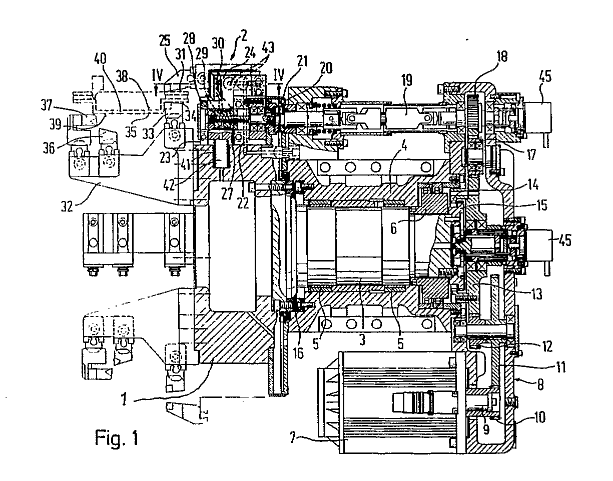

Fig. 1

EP 0 424 844 A2

## WERKZEUGREVOLVER FÜR WERKZEUGMASCHINEN

Die Erfindung bezieht sich auf einen Werkzeugrevolver für Werkzeugmaschinen mit einer in bestimmten Drehwinkellagen positionierbaren und von einem Motor über ein Getriebe drehbaren Revolverscheibe, wobei das Getriebe auch zum Antrieb einer Werkzeugantriebswelle dient, die üblicherweise mit antreibbaren von der Revolverscheibe gehaltenen Werkzeugen kuppelbar ist.

Ein Werkzeugrevolver dieser Art ist aus der DE-PS 37 30 561 bekannt. In der Praxis treten häufig Fälle auf, in denen ein Werkstück an zwei parallel zueinanderliegenden Flächen gleichzeitig bearbeitet werden muß, wobei die Forderung besteht, daß die Werkzeugschneide nach der Bearbeitung nicht wieder über die bearbeitete Fläche zurückgeführt werden darf, um Rückführriefen zu vermeiden.

Zur Lösung dieses Problems ist es bekannt zwei Schlitten vorzusehen, die in Richtung der X-Achse miteinander gekuppelt sind, also gemeinsam miteinander verfahrbar sind, die jedoch in Richtung der Z-Achse unabhängig voneinander verfahrbar sind, um die jeweiligen Abhebbewegungen der Werkzeugschneide vom Werkzeugstück, die bezogen auf die beiden Werkzeugschneiden gegenläufig verlaufen, durchführen zu können. Dies erfordert einen hohen konstruktiven Aufwand, wobei diese Lösung auch noch den Nachteil aufweist, daß die beiden Schlitten einen verhältnismäßig großen Platzbedarf aufweisen und wegen der Anordnung der Hauptspindel für das einzuspannende und zu bearbeitende Werkstück nur ungenügend zugänglich sind.

Aufgabe der Erfindung ist es eine konstruktiv einfache und platzsparende Lösung zu schaffen, die obendrein eine bequeme Zugänglichkeit zu den Werkzeugen ermöglicht und mit der eine gute Bearbeitungsqualität erzielt wird.

Zur Lösung diese Aufgabe wird ein Werkzeugrevolver für Werkzeugmaschinen gemäß dem Oberbegriff des Patentanspruches 1 benutzt, wie er aus der DE-PS 37 30 561 bekannt ist, und der erfindungsgemäß derart ausgestaltet ist, daß an der Revolverscheibe anstelle der antreibbaren Werkzeuge zumindest eine Werkzeughaltevorrichtung vorgesehen ist, die ein Basisteil und ein gegenüber dem Basisteil senkrecht zur Revolverachse verschiebbaren und einstellbaren Werkzeughalter aufweist, daß im Basisteil ein Zustellgetriebe für den Werkzeughalter vorgesehen ist, das mit der Werkzeugantriebswelle kuppelbar ist und daß jeder Werkzeughaltevorrichtung ein an der Revolverscheibe fest angeordneter Werkzeughalter für ein dem radial verschiebbaren Werkzeug radial gegenüberliegendes Werkzeug vorgesehen ist, wobei das verschiebbare und das fest angeordnete Werkzeug zum gleichzeitigen Bearbeiten gegenüberliegender Seiten eines Werkstückes dient.

Diese von einem Revolver für Werkzeugmaschinen ausgehende Lösung ist konstruktiv einfach und aufgrund der drehbaren Revolverscheibe bietet diese Anordnung auch eine leichte Zugänglichkeit zu den Werkzeugen. Außerdem ist diese Ausgestaltung äußerst platzsparend, weil nur ein Schlitten mit einem Werkzeugrevolver vorgesehen ist. Die durch die Lösung ermöglichte gleichzeitige Bearbeitung zweier gegenüberliegender Seiten eines Werkstückes durch Werkzeuge, die mittels Werkzeughalter jeweils an einer Werkzeughaltevorrichtung am Revolverkopf angebracht sind und relativ zueinander unabhängig von der Revolverkopfschlittenbewegung in der jeweils gewählten Zuordnung verbleiben können, ergibt eine vorteilhafte Bearbeitungsqualität.

Aus der DE-OS 34 18 215 ist zwar eine Maschinenwerkzeughaltereinheit bekannt, bei der die Drehung der Spindel zur radialen Verstellung der Werkzeuge genutzt wird, jedoch ist keinerlei Anregung für die gleichzeitig beidseitige Bearbeitung des Werkstückes durch zwei Werkzeuge, die an einer Werkzeughaltevorrichtung angebracht sind, entnehmbar.

Eine vorteilhafte Ausgestaltung der Erfindung ergibt sich dadurch, daß das Zustellgetriebe eine mit der Werkzeug-Antriebswelle kuppelbare Spindel und eine in dem Basisteil verschiebbar, jedoch undrehbar geführte Mutter aufweist, die mit einem Mitnehmer in eine Nut des Werkzeughalters eingreift, welche schräg zur Verschieberichtung des im Basisteil verschiebbar geführten Werkzeughalters verläuft. Diese Getriebeausbildung ist konstruktiv sehr einfach und ermöglicht trotzdem eine exakte Zustellbewegung des Werkzeughalters.

Die Bearbeitungsqualität fördernde Maßnahmen sind nachfolgend aufgeführt:

Um die Spielfreiheit im Verschiebeantrieb des Werkzeughalters zu gewährleisten ist dieser in weiterer Ausgestaltung der Erfindung in Bewegungsrichtung durch eine Feder belastet.

Um den Werkzeughalter in einer bestimmten Position feststellen zu können, kann in weiterer Ausgestaltung der Erfindung im Basisteil zumindest ein quer zur Bewegungsrichtung des Werkzeughalters verschiebbar geführter, hydraulisch beaufschlagbarer Kolben angeordnet sein, der im beaufschlagten Zustand gegen den Werkzeughalter drückt.

Damit der Werkzeughalter und damit die Werkzeugschneide in ihrer Lage genau einstellbar ist, ist gemäß einer vorteilhaften Weiterbildung der Erfindung die Werkzeug-Antriebswelle mit einem Drehgeber verbunden, der bei einer Drehbewegung entsprechende Impulse abgibt, die zur Einstellung einer bestimmten Position bzw. zum Wiederauffinden einer vorgegebenen Position der Werkzeugschneide verwendbar sind.

Die Erfindung wird nachstehend anhand eines in der Zeichnung dargestellten Ausführungsbeispieles näher erläutert. In der Zeichnung zeigen:

Fig. 1 : einen Schnitt durch einen Revolver für Werkzeugmaschinen mit einer Werkzeughaltevorrichtung;

Fig. 2 : eine Vorderansicht des Revolvers;

Fig. 3 : einen Schnitt nach der Linie III - III in Fig. 2; und

Fig. 4 : einen Schnitt nach der Linie IV - IV in Fig. 1.

Wie aus den Fig. 1 und 2 ersichtlich sind einer Revolverscheibe 1 an mehreren auf den Umfang gleichmäßig verteilten Positionen Werkzeughaltevorrichtungen angeordnet, die insgesamt mit 2 bezeichnet sind.

Die Revolverscheibe 1 ist an einer Revolverwelle 3 befestigt, die in einem Revolvergehäuse 4 mittels Lagern 5 drehbar und axial verschiebbar gelagert ist. Zur Axialverschiebung ist ein doppelt wirkender hydraulischer Kolben 6 vorgesehen.

Zum Antrieb der Revolverwelle, d. h. zu ihrer winkelmäßigen Verdrehung dient ein Motor 7, der über ein angeflanschtes, insgesamt mit 8 bezeichnetes Getriebe die Drehbewegung der Revolverwelle 3 bewirkt. Hierfür ist auf der Motorwelle 9 ein Ritzel 10 angeordnet, das mit einem Zahnrad 11 kämmt, welches drehfest mit einem weiteren Zahnrad 12 verbunden ist, das mit einem Zahnrad 13 in Eingriff steht, welches koaxial zur Revolverwelle 3 angeordnet ist. Das koaxiale Zahnrad 13 ist mit einem Zahnrad 14 mit Innenverzahnung fest verbunden, das mit einem fest auf der Revolverwelle 3 angeordneten Zahnrad 15 in Eingriff gebracht werden kann, und zwar in Abhängigkeit von der axialen Verschiebelage der Revolverwelle 3. In der in Fig. 1 dargestellten Lage ist die Revolverwelle mittels einer Hirthkupplung 16 gegenüber dem Revolvergehäuse 4 festgelegt. Wird die Revolverwelle 3 mittels des Kolbens 6 in ihre andere Endstellung verschoben, dann kommt die Hirth-Kupplung 16 frei und die Zahnräder 14 und 15 in Eingriff, die eine schaltbare Kupplung darstellen, mit deren Hilfe der Motor 7 über das Getriebe mit der Revolverwelle 3 in Verbindung gebracht werden kann.

Das koaxiale Zahnrad 13 steht über ein weiteres Zahnrad 17 mit einem Antriebsritzel 18 in Verbindung, das auf einer Werkzeugantriebswelle 19 angeordnet ist, die über eine Kupplung 20, die als Stirnverzahnung bzw. Hirth-Kupplung ausgeführt ist, mit der Werkzeughaltevorrichtung 2 verkuppelbar ist.

Der Kupplungsteil 20 der Werkzeugsantriebswelle 19 ist mit einem entsprechenden Kupplungsteil 21 eines Zustellgetriebes 22 kuppelbar, welches innerhalb eines Basisteiles 23 der Werkzeughaltevorrichtung 2 vorgesehen ist.

Die Werkzeughaltevorrichtung 2 umfaßt das Basisteil 23, das auf der Revolverscheibe 1 befestigt ist sowie einen gegenüber dem Basisteil 23 verschiebbar geführten Werkzeughalter 24. Der Werkzeughalter 24 trägt im dargestellten Ausführungsbeispiel einen Drehstahl 25 zur Bearbeitung einer ebenen Fläche.

Das Zustellgetriebe 22 weist eine Spindel 27 und eine im Basisteil 23 undrehbar jedoch verschiebbar geführte Mutter 28 auf. Die Spindel 27 ist mit dem bereits erwähnten Kupplungsteil 21 verbunden und kann daher mit der Werkzeugantriebswelle 19 in Verbindung gebracht werden.

Die Mutter 28 ist mit einem Mitnehmer 29 verbunden, der in eine schräg verlaufende Nut 30 des Werkzeughalters 24 eingreift. Durch Ankuppeln der Spindel 27 über die Kupplungsteile 21 und 20 an die Werkzeugantriebswelle 19 wird bei Drehung derselben die Spindel 27 gedreht, die eine Verschiebung der Mutter 28 bewirkt, welche über den Mitnehmer 29 den Werkzeughalter 24 in seiner Führung im Basisteil 23 in radialer Richtung, d. h. senkrecht zur Revolverachse verschiebt und dadurch eine Zustellung des Werkzeuges 25 in bezug auf eine zu bearbeitende ebene Fläche 31 verschiebt.

An der Revolverscheibe 1 ist ein weiterer Werkzeughalter 32 vorgesehen, der einen weiteren Drehstahl 33 trägt, welcher zur Bearbeitung einer Fläche 34 dient, die parallel zur Fläche 31 liegt. Im dargestellten Ausführungsbeispiel handelt es sich um eine Bremsscheibe 35, bei der die Bremsflächen 31 und 34 ohne Rückszugsriefen zu bearbeiten sind. Die Bremsscheibe ist dabei in einer nicht dargestellten Spindel eingespannt, wobei die Bearbeitung durch beide Drehstähle 25 und 33 gleichzeitig von außen nach innen erfolgt. In der dargestellten Lage ist die Bearbeitung gerade beendet. Hierauf wird der Werkzeughalter 24 mittels der Werkzeugantriebswelle 19 und des Zustellgetriebes 22 nach außen verschoben, wodurch der Drehstahl 25 von der Bearbeitungsfläche 31 frei kommt. Hierauf wird dann der den Revolver tragende und in der Zeichnung nicht dargestellte Schlitten in die Gegenrichtung verfahren, wodurch der Drehstahl 33 von der Fläche 34 der Bremsscheibe 35 freikommt. In dieser Stellung kann dann der Revolver mittels des Schlittens in radialer Richtung bezogen auf die Bremsscheibe 33 weggefahren werden.

Der Werkzeughalter 32 trägt noch zwei weitere Werkzeuge 36 und 37, die zur gleichzeitigen Bearbeitung der Aufspannflächen 38 und 39 der Bremsscheibe 35 dienen, wofür das Werkzeug 37 durch die Öffnung 40 der Bremsscheibe 35 einführbar ist.

Um eine spielfreie Verschiebbarkeit des Werkzeughalters 24 zu gewährleisten, ist dieser durch eine Feder 41 abgestützt, deren gegenüberliegendes Ende in einer Bohrung 42 der Revolverscheibe 1 aufgenommen ist.

Wie aus den Fig. 1 und 4 ersichtlich sind im Basisteil 23 zwei hydraulisch betätigbare Kolben 43 vorgesehen, die gleichzeitig über eine Zuführleitung 44 beaufschlagbar sind und in diesem Zustand den Werkzeughalter 24 festklemmen, wenn eine Bearbeitung stattfindet.

An dem dem Kupplungsteil 20 gegenüberliegenden Ende ist die Werkzeugantriebswelle 19 mit einem Drehgeber 45 versehen, der bei Drehung der Werkzeugsantriebswelle 19 entsprechende Impulse abgibt, die es ermöglichen, die genaue Lage der Werkzeugschneide einzustellen.

## Ansprüche

1. Werkzeugrevolver für Werkzeugmaschinen mit einer in bestimmten Drehwinkellagen positionierbaren und von einem Motor über ein Getriebe drehbaren Revolverscheibe, wobei das Getriebe auch zum Antrieb einer Werkzeugantriebswelle dient, die üblicherweise mit antreibbaren, von der Revolverscheibe gehaltenen Werkzeugen kuppelbar ist, **dadurch gekennzeichnet,** daß an der Revolverscheibe (1) anstelle der antreibbaren Werkzeuge zumindest eine Werkzeughaltevorrichtung (2) vorgesehen ist, die ein Basisteil (23) und ein gegenüber dem Basisteil (23) senkrecht zur Revolverachse verschiebbaren und einstellbaren Werkzeughalter (24) aufweist, daß im Basisteil (23) ein Zustellgetriebe (22) für den Werkzeughalter (24) vorgesehen ist, das mit der Werkzeugantriebswelle (19) mittels Kupplungsteile (20, 21) kuppelbar ist und daß jeder Werkzeughaltevorrichtung (2) ein an der Revolverscheibe (1) fest angeordneter Werkzeughalter (32) für ein dem radial verschiebbaren Werkzeug (25) radial gegenüberliegendes Werkzeug (33) vorgesehen ist, wobei das verschiebbare und das fest angeordnete Werkzeug zum gleichzeitigen Bearbeiten gegenüberliegender Seiten eines Werkstückes dienen.

2. Werkzeugrevolver nach Anspruch 1, **dadurch gekennzeichnet,** daß das Zustellgetriebe (22) eine mit der Werkzeugantriebswelle (19) kuppelbare Spindel (27) und eine in dem Basisteil (23) verschiebbar, jedoch undrehbar geführte Mutter (28) aufweist, die mit einem Mitnehmer (29) in eine Nut (30) des Werkzeughalters (24) eingreift, welche schräg zur Verschieberichtung des im Basisteil (23) verschiebbar geführten Werkzeughalters (24) verläuft.

3. Werkzeugrevolver nach Anspruch 1 oder 2, **da-**

**durch gekennzeichnet,** daß der Werkzeughalter (24) in Bewegungsrichtung durch eine Feder (41) belastet ist.

4. Werkzeugrevolver nach einem der Ansprüche 1 bis 3, **dadurch gekennzeichnet,** daß im Basisteil (23) zumindest ein quer zur Bewegungsrichtung des Werkzeughalters (24) verschiebbar geführter, hydraulisch beaufschlagbarer Kolben (23) angeordnet ist, der im beaufschlagten Zustand gegen den Werkzeughalter (24) drückt.

5. Werkzeugrevolver nach einem der Ansprüche 1 bis 4, **dadurch gekennzeichnet,** daß die Werkzeugantriebswelle (19) mit einem Drehgeber (45) verbunden ist.